# FASCICULE DE BREVET EUROPEEN

(11) **EP 0 614 722 B1**
(45) Date de publication et mention de la délivrance du brevet: **27.11.1996**
(21) Numéro de dépôt: 94420083.1
(22) Date de dépôt: 10.03.1994
(51) Int. Cl.: B23P 15/00, F16C 11/06, F16C 33/14

(54) **Procédé de revêtement dur d'une rotule et rotule mise en oeuvre par ce procédé**
Verfahren zum Hartbedecken einer Schubkugel eines Kugelgelenks und so hergestellte Schubkugel
Method of hard coating a spherical bearing of a ball joint and spherical bearing obtained by this method

(30) Priorité: 11.03.1993 FR 9303050
(43) Date de publication de la demande: 14.09.1994
(73) Titulaire: SARMA, F-26240 Saint-Vallier (FR)
(72) Inventeur: Hugon, Jean-Claude, F-39570 Pannessieres (FR)
(74) Mandataire: Karmin, Roger

(56) Documents cités:
- DE-A- 3 045 829
- FR-E- 38 265
- GB-A- 2 170 279
- US-A- 3 068 552
- US-A- 3 823 030

## Description

La présente invention est relative aux revêtements appliqués sur une rotule destinée à coopérer avec une bague extérieure pourvue d'un revêtement anti-friction tel que par exemple du polytétrafluoréthylène.

De tels assemblages à rotule sont en application depuis fort longtemps dans l'industrie aéronautique en vue de constituer des liaisons pour des bielles ou autres organes de commande.

Jusqu'à présent, et comme on l'a décrit dans le brevet britannique GB-2 170 279.B, l'on utilise une bague extérieure dont la surface concave sphérique est revêtue de polytétrafluoréthylène, tandis que la rotule qui coopère avec la bague est revêtue d'une couche mince de matière très dure tel que du carbure de tungstène.

Comme la rotule comporte deux pôles aplatis, il existe deux arêtes circulaires vives entre les deux plats et la partie centrale sphérique de la rotule. Du fait que c'est seulement cette partie centrale qui est revêtue d'une couche dure telle que le carbure de tungstène, il se présente fréquemment aussi bien lors de la fabrication que lors de l'utilisation des pièces, des irrégularités importantes ou des écaillages au niveau des raccordement de la partie centrale sphérique et des deux faces. Les éclats de la surface durcie conduisent au rebut de la pièce considérée, car il est inacceptable de l'utiliser telle quelle. Ces rebuts impliquent des coûts de démontage et remontage élevés particulièrement si les défauts se produisent lors du montage de l'articulation.

Les perfectionnements qui font l'objet de la présente invention visent à remédier à ces inconvénients et à permettre la réalisation d'une rotule à deux pôles aplatis ne présentant aucun risque de détérioration de la couche de matière rapportée au niveau de raccordement de cette couche et des faces latérales de la rotule.

Suivant l'invention, le procédé de revêtement consiste :
- à creuser sur la surface extérieure de la rotule une dépression dont la périphérie est située à une certaine distance des deux faces polaires de la rotule afin qu'elle soit bordée par des zones surélevées ;
- à revêtir l'ensemble de la surface extérieure sphérique d'une couche de matière dure ;
- et à usiner la couche sur une profondeur telle que cette couche disparaît complètement sur les zones surélevées et ne demeure que dans la dépression.

Le dessin annexé, donné à titre d'exemple, permettra de mieux comprendre l'invention, les caractéristiques qu'elle présente et les avantages qu'elle est susceptible de procurer :
Fig. 1 est une vue par côté d'une rotule à deux pôles aplatis réalisée conformément au procédé suivant l'invention.
Fig. 2 en est une vue partielle agrandie illustrant la manière dont est usinée la partie sphérique de la rotule avant de recevoir un revêtement dur.
Fig. 3 est une vue semblable à celle de fig. 2, mais correspondant à la phase de revêtement global de la face sphérique de la rotule.
Fig. 4 est une vue de détail semblable à celle de fig. 3, mais illustrant la partie sphérique de la rotule à l'état fini.

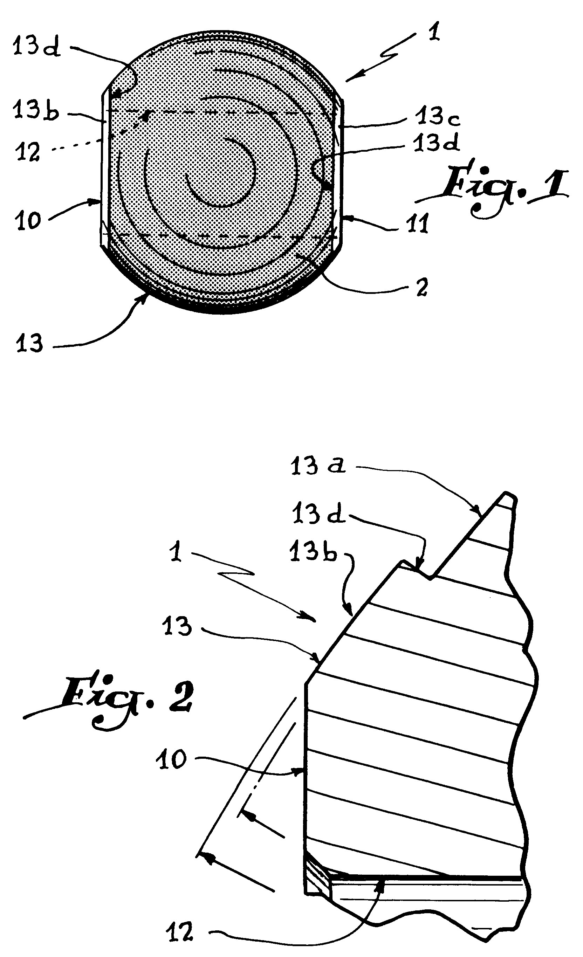

On a illustré en fig. 1 une rotule 1 se représentant sous la forme d'une sphère dont deux pôles diamétralement opposés sont aplatis pour constituer deux faces parallèles 10, 11. Dans l'axe géométrique de ces faces est ménagé un alésage transversal 12 auquel est associé l'organe destiné à recevoir la rotule.

Conformément à l'invention, la partie sphérique 13 de la rotule 1 comporte une dépression centrale 13a dont la phériphérie est située à une courte distance des deux faces 10, 11 de manière que le fond de cette dépression soit bordé par deux zones surélevées 13b, 13c déterminant avec ce fond un épaulement tel que celui 13d.

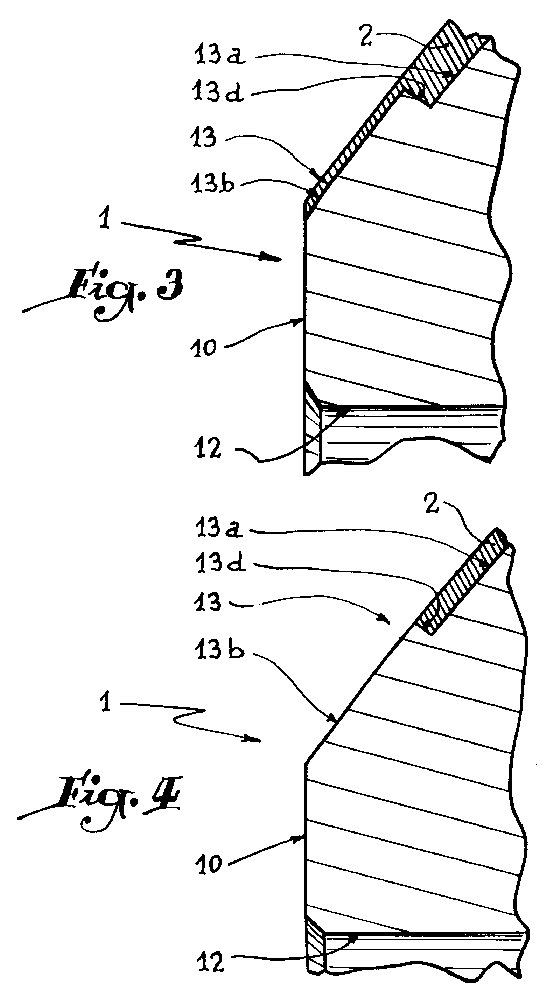

Sur toute la surface de la partie sphérique 13 de la rotule, on dépose une couche de matière dure 2 de telle sorte que cette couche soit déposée dans la dépression 13a ainsi que sur les deux zones 13b, 13c, comme illustré en fig. 3. La profondeur de la dépression 13a étant de l'ordre de 0,05 millimètre, on prévoit que l'épaisseur de la couche 2 soit plus épaisse que cette profondeur de ladite dépression soit de l'ordre de 0,075 à 0,1 millimètre environ si bien que les deux zones 13b et 13c reçoivent une épaisseur de matière dure 2 de l'ordre de 0,05 à 0,15 millimètre. La matière dure 2 est préférablement, bien que non exclusivement, constituée par du carbure de tungstène de dureté au moins égale à 1000 Vickers.

La dernière phase du procédé suivant l'invention consiste à rectifier la surface sphérique globale de la couche 2 jusqu'à ce que cette couche disparaisse complètement au-dessus des zones surélevées 13b et 13c qui, mises à nu, se trouvent exactement sur la même sphère que la face extérieure de la couche 2 disposée uniquement dans la dépression 13a.

De cette manière, les limites de la couche 2 sont protégées par l'épaulement 13d constitué par la jonction de la dépression 13a et des zones 13b, 13c de telle sorte qu'il n'existe plus de risque d'écaillage ou d'éclat des limites de la couche 2 lors des opérations de montage.

## Revendications

1. Procédé de revêtement dur d'une rotule (1) à deux pôles aplatis, caractérisé en ce qu'il consiste :
- à creuser sur la surface extérieure (13) de la rotule (1) une dépression (13a) dont la périphérie est située à une certaine distance des deux faces polaires (10, 11) de la rotule (1) afin qu'elle soit bordée par des zones surélevées (13b, 13c) ;
- à revêtir l'ensemble de la surface extérieure sphérique (13) d'une couche de matière dure (2) ;
- et à usiner la couche (2) sur une profondeur telle que cette couche disparaît complètement sur les zones surélevées (13b, 13c) et ne demeure que dans la dépression (13a).

2. Procédé de revêtement suivant la revendication 1, caractérisé en ce que le revêtement (2) présente une dureté d'au moins 1000 Vickers.

3. Procédé de revêtement suivant la revendication 1, caractérisé en ce que la profondeur de la dépresseion (13a) est de l'ordre de 0,05 millimètre, l'épaisseur totale de la couche (2) étant de l'ordre de 0,75 millimètre après finition.

4. Procédé de revêtement suivant l'une quelconque des revendications 1 à 3, caractérisé en ce que la couche (2) est constituée par du carbure de tungstène.

5. Rotule (1) à deux pôles aplatis, caractérisée en ce qu'elle est réalisée par mise en oeuvre du procédé suivant l'une quelconque des revendications précédentes.

## Claims

1. A method of hard-coating a ball joint ball (1) having two flat poles, characterised in that it consists of:
- hollowing out a depression (13a) on the external surface (13) of the ball joint ball (1), the periphery of which depression is situated at a certain distance from the two polar faces (10, 11) of the ball joint ball (1) so that it is bordered by elevated areas (13b, 13c) ;
- coating the whole of the spherical external surface (13) with a layer of hard material (2) ;
- and machining the layer (2) to a depth such that said layer completely disappears on the elevated areas (13b, 13c) and only remains in the depression (13a).

2. A method of coating according to claim 1, characterised in that the coating (2) has a hardness of at least 1000 Vickers.

3. A method of coating according to claim 1, characterised in that the depth of the depression (13a) is of the order of 0.05 millimetres, the total thickness of the layer (2) being of the order of 0.75 millimetres after finishing.

4. A method of coating according to any one of claims 1 to 3, characterised in that the layer (2) consists of tungsten carbide.

5. A ball joint ball (1) having two flat poles, characterised in that it is produced by carrying out the method according to any one of the preceding claims.

## Patentansprüche

1. Verfahren zur harten Beschichtung eines Kugelgelenkes (1) mit zwei abgeflachten Polen,
**dadurch gekennzeichnet,**
daß es besteht aus:
Aushöhlen einer Vertiefung (13a) aus der Außenfläche (13) des Kugelgelenkes (1), deren Umfang in einem gewissen Abstand zu den zwei Polflächen (10,11) des Kugelgelenkes (1) liegt, damit sie von erhöhten Zonen (13b,13c) umgeben ist;
Beschichten der Gesamtheit der Kugelaußenfläche (13) mit einer Schicht aus hartem Material (2); und
Bearbeiten der Schicht (2) bis zu einer Tiefe, daß die Schicht vollständig von den erhöhten Zonen (13b,13c) verschwindet und nur in der Vertiefung (13a) verbleibt.

2. Verfahren zur Beschichtung nach Anspruch 1, dadurch gekennzeichnet, daß die Schicht eine Härte von mindestens 1000 Vickers aufweist.

3. Verfahren zur Beschichtung nach Anspruch 1, dadurch gekennzeichnet, daß die Tiefe der Vertiefung (13a) in der Größenordnung von 0,05 mm liegt, wobei die Gesamttiefe der Schicht (2) nach der Endbearbeitung eine Größenordnung von 0,75 mm hat.

4. Verfahren zur Beschichtung nach einem der Ansprüche 1 bis 3, dadurch gekennzeichnet, daß die Schicht (2) aus einem Wolframkarbid besteht.

5. Kugelgelenk (1) mit zwei abgeflachten Polen, **dadurch gekennzeichnet,** daß sie unter Durchführung des Verfahrens nach einem der vorhergehenden Ansprüche hergestellt ist.
